# DEMANDE DE BREVET EUROPEEN

(11) **EP 4 027 262 A1**
(43) Date de publication de la demande: **13.07.2022**
(21) Numéro de dépôt: 22150786.6
(22) Date de dépôt: 10.01.2022
(51) Int. Cl.: G06F 30/12, G06F 30/13, G06F 3/04815, G06F 3/048, G06F 111/18, G06F 111/20

(54) **MÉTHODE DE RECHERCHE D'UN OBJET VIRTUEL, PRODUIT PROGRAMME D ORDINATEUR ET TERMINAL ASSOCIÉS**

(30) Priorité: 11.01.2021 FR 2100221
(71) Demandeur: OXP, 94160 Saint Mandé (FR)
(72) Inventeur: TABARY, Frédéric, 44300 Nantes (FR); SAINTOT, Jean-Yves, 95160 Montmorency (FR); GORMAND, Baptiste, 75016 PARIS (FR); GERARDIN, Olivier, 69370 Saint-Didier-au-Mont-d'Or (FR)
(74) Mandataire: Oak & Fox

(57) **Abrégé**

L'invention concerne une méthode de recherche d'objets virtuels dans une bibliothèque d'objets virtuels comprenant :
▪ une définition d'une zone virtuelle (6) ;
▪ génération d'une requête de données ;
▪ transmission de ladite requête à la bibliothèque ;
▪ Extraction d'une liste d'objets virtuels ;
▪ l'affichage, dans une fenêtre de résultat (11) du terminal électronique (20), d'objets virtuels (13) issue de ladite liste d'objets virtuels (L1).

## Description

### Domaine de l'invention

L'invention concerne une méthode de recherche d'objet virtuel dans une bibliothèque, notamment une bibliothèque numérique comportant un ensemble d'objets mobiliers pouvant être par exemple des équipements électroménagers, des supports muraux, des meubles de rangement, etc. Le domaine de l'invention se rapporte plus particulièrement à des moteurs de recherche permettant d'accéder à de tels objets et à les sélectionner pour les agencer dans une maquette numérique préexistante.

### État de la technique

La représentation d'objets virtuels dans un environnement virtuel correspondant à un environnement réel est utilisée depuis longtemps, notamment dans les logiciels de visualisation d'habitation ou de bureau pour prévoir leur aménagement.

On connait par exemple le document EP2786363 qui décrit un procédé pour la représentation d'un objet dans un environnement virtuel. Ce document décrit la sélection d'un objet virtuel pour le placer dans un environnement virtuel généré. Une interface affiche une liste de propositions d'objets virtuels à intégrer dans l'environnement.

Un inconvénient de ces solutions est que l'utilisateur souhaitant remplir un espace disponible dans l'environnement virtuel doit chercher au sein d'une bibliothèque un objet à intégrer sans en connaitre les contraintes d'intégration. En effet, le plus souvent il ne peut pas visualiser à l'avance si l'objet est bien adapté à l'espace disponible.

Il existe également des systèmes de sélection d'un objet virtuel au sein d'une bibliothèque, mais cette sélection se fait par des choix utilisateur, comme le type d'objet, par exemple « canapé », qu'il recherche. Mais cette méthode prive ainsi l'utilisateur de trouver d'autres types d'objets qui auraient pu correspondre à l'emplacement disponible.

L'invention vise donc à fournir une méthode permettant de surmonter les inconvénients susmentionnés.

### Résumé de l'invention

Selon un aspect, l'invention concerne une méthode de recherche d'objets virtuels dans une bibliothèque d'objets virtuels comprenant :
▪ une définition d'une zone virtuelle correspondant à une zone d'espace disponible dans un environnement virtuel correspondant à un environnement réel par un premier utilisateur à l'aide d'un premier terminal électronique, la zone virtuelle étant caractérisée par des données géométriques dans un repère associé à l'environnement virtuel ;
▪ une extraction d'au moins une information de proximité de la position de la zone virtuelle avec un objet virtuel agencé à proximité de ladite zone virtuelle dans l'environnement virtuel ;
▪ optionnellement une génération d'une requête de données à partir des données géométriques et de l'information de proximité ;
▪ optionnellement une transmission de ladite requête à la bibliothèque d'objets virtuels ;
▪ sélection d'un premier ensemble d'objets virtuels dans la bibliothèque d'objets virtuels dont les dimensions sont compatibles des données géométriques caractérisant la zone virtuelle,
▪ sélection d'un second ensemble d'objets filtrés dans la bibliothèque en fonction de l'information de proximité associée à la zone virtuelle ;
▪ l'extraction d'une liste d'objets compris dans les deux ensembles sélectionnés ;
▪ l'affichage dans une fenêtre de résultat(s) du premier terminal électronique d'objets virtuels issus de ladite liste d'objets virtuels.

La méthode selon l'invention permet avantageusement de définir une zone dans un environnement virtuel et de générer une liste de propositions d'objet virtuel à insérer dans ladite zone virtuelle définie. La liste de propositions est avantageusement générée en fonction des dimensions de la zone virtuelle et en fonction de la position de la zone virtuelle dans l'environnement par rapport aux autres objets virtuels dans l'environnement.

Selon un aspect, l'invention concerne une méthode pour générer une liste d'objets virtuels comprenant :
▪ une définition d'une zone virtuelle correspondant à une zone d'espace disponible dans un environnement virtuel correspondant à un environnement réel, ledit environnement virtuel étant défini par une pluralité de points et de surfaces délimitant une région associée à un repère cartésien et comportant une représentation 3D pouvant être générée sur un afficheur d'un terminal électronique selon un angle de vue, ladite zone virtuelle étant défini par un premier utilisateur à l'aide d'un premier terminal électronique, la zone virtuelle étant caractérisée par des données géométriques dans un repère associé à l'environnement virtuel ;
▪ une extraction d'au moins une information de proximité de la position de la zone virtuelle avec un objet virtuel environnant agencé à proximité de ladite zone virtuelle dans l'environnement virtuel, ledit objet étant un objet défini par une pluralité de points et de surfaces et comportant une représentation 3D pouvant être générée sur un afficheur d'un terminal électronique, selon un angle de vue ;
▪ une génération d'une requête de données à partir des données géométriques et de l'information de proximité ;
▪ transmission de ladite requête à une bibliothèque d'objets virtuels, ladite bibliothèque comportant des données caractérisant des informations de proximité d'au moins un objet virtuel, ladite bibliothèque étant accessible depuis un serveur distant ;
▪ une sélection d'un premier ensemble d'objets virtuels dans la bibliothèque d'objets virtuels dont les dimensions sont compatibles des données géométriques caractérisant la zone virtuelle,
▪ une sélection d'un second ensemble d'objets virtuels filtrés dans la bibliothèque en fonction de l'information de proximité associée à la zone virtuelle ;
▪ une extraction d'une liste d'objets compris dans les deux ensembles sélectionnés ;
▪ un affichage, dans une fenêtre de résultat du premier terminal électronique, d'objets virtuels issus de ladite liste d'objets virtuels.

Selon un mode de réalisation, une pluralité de zones virtuelles complexes sont prédéfinies et sont accessibles depuis une interface utilisateur, chaque zone virtuelle complexe comportant un assemblage de formes tridimensionnelles régulières géométriques, au moins une zone virtuelle complexe comportant un assemblage d'une pluralité de formes parallélépipédiques.

Selon un mode de réalisation, la requête générée automatiquement à partir de la sélection d'une zone virtuelle complexe comporte au moins 4 dimensions extraites de ladite zone virtuelle complexe.

Selon un mode de réalisation, une commande entrainant une transformation appliquée à une forme tridimensionnelle régulière géométrique d'une zone virtuelle complexe entraine la déformation de l'ensemble de la zone virtuelle complexe.

Selon un mode de réalisation, une commande entrainant une transformation appliquée à une forme tridimensionnelle régulière géométrique d'une zone virtuelle complexe entraine la déformation de la seule forme tridimensionnelle régulière géométrique.

Selon un mode de réalisation, au moins une surface de la zone virtuelle est définie au moyen d'une sélection d'un point ou d'une zone dans l'environnement virtuel et la détection d'une surface complémentaire d'un objet virtuel présent dans un environnement virtuel à proximité de ladite sélection.

Selon un mode d'exécution, les objets virtuels de la bibliothèque comprennent chacun des informations de contrainte de proximité et la sélection d'un second ensemble comprend la sélection d'objets virtuels dont les contraintes de proximité sont compatibles avec l'information de proximité de la zone virtuelle. Ces informations de contraintes de proximité permettent avantageusement de sélectionner les objets virtuels en fonction du contexte de l'environnement virtuel.

Selon un mode d'exécution, la sélection d'un premier ensemble comprend la sélection des objets virtuels de la bibliothèque dont les dimensions sont telles que l'objet virtuel peut être inséré dans la zone virtuelle.

Selon un mode d'exécution, l'information de proximité comprend une distance entre la zone virtuelle et un objet virtuel environnant de l'environnement virtuel.

Selon un mode d'exécution, l'information de proximité comprend une donnée caractéristique d'une position de ladite zone virtuelle vis-à-vis objet virtuel environnant. Par exemple, il peut s'agir d'une zone virtuelle définie de part et d'autre d'un plan prédéfini tel qu'un plafond, un mur ou un sol. Cette solution permet, par exemple, de sélectionner des objets de types « fenêtres » plutôt qu'un objet de type « décoration murale » ou encore un objet de type « jacuzzi » plutôt qu'un objet de type table de jardin. L'intersection d'une zone virtuelle avec un plan permet donc d'accéder et de sélectionner plus précisément des objets virtuels pertinents.

Selon un mode d'exécution, la définition de la zone virtuelle comprend une étape de génération d'une forme et des dimensions de la zone virtuelle et une étape de positionnement et d'orientation de la zone virtuelle dans l'environnement virtuel.

Selon un mode d'exécution, la génération d'une forme peut être réalisée par un dessin d'un utilisateur par un module de définition du premier terminal.

Selon un mode d'exécution, la méthode comprend en outre la sélection d'un objet virtuel parmi la liste d'objets virtuels affichés et son insertion dans la zone virtuelle.

Selon un deuxième aspect, l'invention concerne un produit programme d'ordinateur comprenant des instructions de code de programme enregistré sur un support utilisable dans un ordinateur qui conduisent à exécuter les étapes de la méthode selon l'invention lorsque ledit programme fonctionne sur un ordinateur.

Selon un troisième aspect, l'invention concerne un terminal électronique comprenant des éléments matériels et logiciels pour exécuter la méthode selon le premier aspect.

Lesdits éléments matériels peuvent comprendre :
- un afficheur pour afficher l'environnement virtuel et la fenêtre de résultat ;
- un module de définition pour définir la zone virtuelle dans l'environnement virtuel et des moyens de connexion à une bibliothèque d'objets virtuels ; et/ou
- une mémoire pour stocker une bibliothèque d'objets virtuels et/ou des moyens de connexion à un réseau.

### Brève description des figures

D'autres caractéristiques et avantages de l'invention ressortiront à la lecture de la description détaillée qui suit, en référence aux figures annexées, qui illustrent :
Fig. 1 : une vue schématique d'un environnement virtuel correspondant à un environnement réel ;
Fig. 2 : une vue de l'environnement virtuel selon la figure 1 dans lequel une zone virtuelle a été définie ;
Fig. 3: une représentation d'un écran d'affichage d'un terminal affichant l'environnement virtuel et une liste d'objets virtuels pouvant être intégrés dans la zone virtuelle définie ;
Fig. 4 : une représentation de l'écran de la figure 3 dans lequel un objet virtuel de la liste a été sélectionné et intégré dans la zone virtuelle de l'environnement virtuel ;
Fig. 5 : un logigramme représentant les étapes de la méthode selon un mode d'exécution de l'invention ;
Fig. 6: une représentation schématique d'un terminal selon un mode de réalisation de l'invention ;
Fig. 7 : une représentation d'un exemple de transformation d'une zone virtuelle complexe ;
Fig. 8: une représentation d'un second exemple de réalisation d'une zone virtuelles complexe,
Fig. 9: une représentation d'un second exemple de réalisation d'une zone virtuelles complexe.

### Description de l'invention

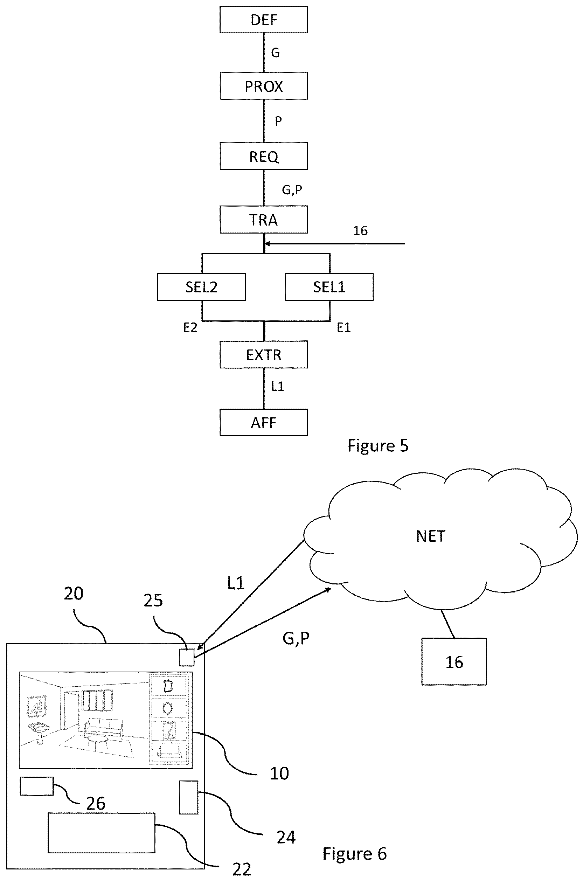

La méthode selon l'invention concerne une méthode de recherche d'un objet virtuel. Elle est décrite ci-après au regard des figures représentant différents aspects de l'invention. Les étapes d'un mode d'exécution de la méthode sont illustrées sur la figure 5. Ladite méthode est préférentiellement mise en œuvre par ordinateur.

Selon un mode de réalisation, un objet virtuel est défini par une pluralité de points et de surfaces et comporte une représentation tridimensionnelle, dite 3D, pouvant être générée sur un afficheur d'un terminal électronique, tel qu'un PC, selon un angle de vue.

Selon un mode de réalisation, un environnement virtuel peut être défini par une pluralité de points et de surfaces délimitant une région associée à un repère cartésien et comportant une représentation 3D pouvant être générée sur un afficheur d'un terminal électronique selon un angle de vue, ladite représentation d'environnement permettant l'affichage d'une pluralité d'objets virtuels positionnés dans ledit environnement virtuel.

Selon un mode de réalisation, une zone virtuelle peut être définie comme un volume fermé défini dans l'environnement virtuel. Selon un cas, ladite zone correspond à une région d'un environnement virtuel ne comportant pas d'objet virtuel.

Les différents éléments virtuels : objet virtuel, environnement virtuel, zone virtuelle peuvent être affichés au moyen d'un afficheur électronique tel qu'un écran d'ordinateur ou de tablette numérique ou de d'un Smartphone. Par ailleurs, une carte graphique tel qu'une carte électronique comprenant un processeur permet de représenter les différents éléments virtuels selon une échelle donnée et selon un angle de vue donnée et selon une représentation tridimensionnelle. Un logiciel tel que celui connu sous le nom de SkechUp qui est une marque déposée permet par exemple de réaliser de telle représentations tridimensionnelles d'éléments virtuels.

La présente invention permet, à l'aide d'un terminal électronique 20, de définir une zone dans un environnement et de recevoir des propositions d'objets virtuels à insérer dans ladite zone. Les objets virtuels sont sélectionnés dans une bibliothèque 16 d'objets virtuels, ladite bibliothèque étant représentée à la figure 6 sous la firme d'un serveur de données accessible depuis un réseau de données.

### Environnement virtuel

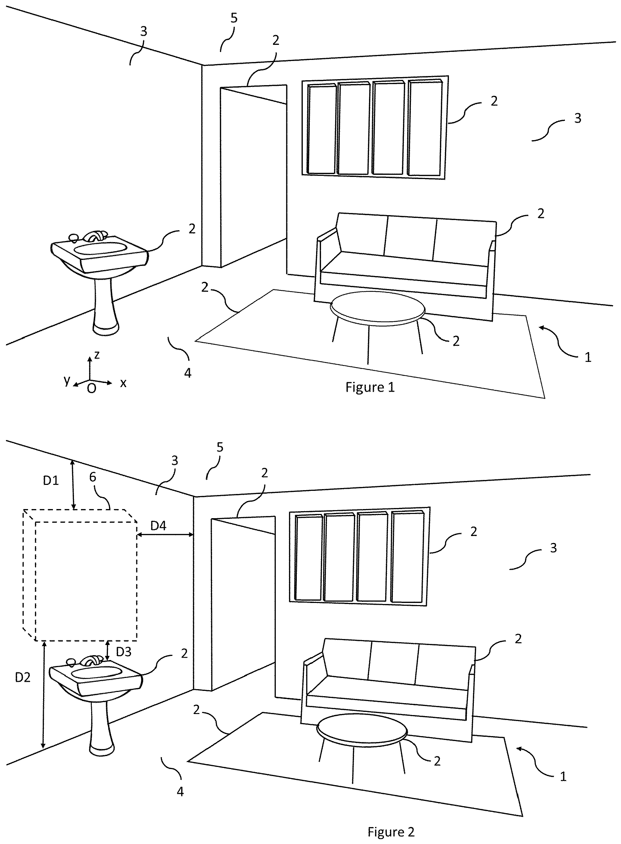

La figure 1 représente un exemple d'environnement virtuel 1 selon l'invention. L'environnement virtuel 1 correspond préférentiellement à un environnement réel. On n'entend pas là que l'environnement virtuel 1 est représentatif d'un environnement qui existe ou qui pourrait exister dans le monde réel. Un environnement réel est par exemple un espace numérique en 3 dimensions pouvant être visualisées sur un afficheur d'un ordinateur ou d'un terminal électronique tel qu'un Smartphone.

L'exemple illustré figure 1 représente un environnement virtuel 1 d'une pièce d'une maison. L'environnement virtuel 1 est construit sur la base d'un référentiel pouvant comprendre un repère orthonormé (O, x, y, z). Il est ainsi possible de mesurer des distances dans l'environnement virtuel 1 et de faire correspondre cette distance à une distance dans le monde virtuel. L'environnement virtuel 1 peut comprendre un environnement virtuel 1 en trois dimensions ou en deux dimensions.

L'exemple d'environnement virtuel 1 de la figure 1 comprend des objets définissant des éléments virtuels. Les éléments virtuels comprennent ici des murs 3, un sol 4 et un plafond 5. L'environnement virtuel 1 comprend en outre des objets virtuels environnants 2. Dans l'exemple illustré, les objets virtuels environnants 2 comprennent une porte, des fenêtres, un canapé, un tapis, une table basse, un lavabo. Un objet virtuel environnant 2 peut inclure tout objet comprenant le même nombre de dimensions que le nombre de dimensions de l'environnement virtuel 1. Les éléments comme les murs peuvent être considérés comme des objets virtuels ou des zones définissant des frontières de l'environnement virtuel 2. Préférentiellement, le sol peut être sécant avec le point O et parallèle à un plan horizontal comprenant deux axes (ici x et y) du repère orthonormé du référentiel (O, x, y, z). Le plafond peut présenter une pente par rapport au plan horizontal.

### Zone virtuelle

La méthode de l'invention comprend une étape de définition DEF dans un environnement virtuel 1 d'une zone virtuelle 6. La définition d'une zone virtuelle 6 est exécutée à l'aide d'un terminal électronique 20. Le terminal électronique 20 peut comprendre un module de définition permettant de définir la zone virtuelle 6 dans l'environnement virtuel 1.

La zone virtuelle 6 correspond à un emplacement disponible dans l'environnement virtuel 1. Par « emplacement disponible », on entend ici un espace dans l'environnement virtuel 1 dans lequel aucun objet virtuel environnant ou élément virtuel n'est présent. Il est donc possible d'intégrer dans n'importe quel point de la zone virtuelle 6 un nouvel objet virtuel sans que cela ne provoque un chevauchement entre deux objets virtuels.

La zone virtuelle 6 est caractérisée par des données géométriques G dans le repère associé à l'environnement virtuel 1. En d'autres termes, la zone virtuelle 6 est caractérisée à minima par ses dimensions en 2 dimensions. Selon un mode préféré, la zone virtuelle 6 est caractérisée par ses dimensions en 3 dimensions.

Selon un exemple de réalisation, la zone virtuelle peut être définie par sa forme et sa position et son orientation dans l'environnement virtuel 1, préférentiellement par rapport au référentiel (O, x, y, z) de l'environnement virtuel 1.

### Définition de la zone virtuelle

Dans un premier exemple, la zone virtuelle 6 peut être définie en dessinant la zone virtuelle 6. Un utilisateur peut ainsi dessiner la forme de la zone virtuelle 6, préférentiellement sur un module de définition 22 d'un terminal électronique 20. Il peut ensuite rectifier ou renseigner les dimensions de la zone virtuelle 6 et corriger ou renseigner la position et/ou l'orientation de la zone virtuelle 6 dans l'environnement virtuel 1.

La zone virtuelle 6 peut être dessinée par l'utilisateur sur une surface tactile d'un terminal électronique 20 ou un écran tactile. Selon un exemple, un dispositif tel qu'un stylet peut être utilisé directement sur la surface tactile. Alternativement, il peut dessiner la forme de la zone virtuelle à l'aide d'une souris, d'un actionneur et d'un pointeur naviguant au sein de l'environnement virtuel 1.

Dans un premier exemple, l'utilisateur sélectionne un type de polyèdre. Le type de polyèdre peut être sélectionné parmi une liste de polyèdres prédéfinis. Le polyèdre peut être sélectionné en dessinant sur une surface tactile. Par exemple, le dessin d'un carré ou d'un rectangle ou le pointage de 4 points permet de sélectionner un parallélépipède.

L'utilisateur définit ensuite les dimensions du polyèdre. Les dimensions du polyèdre peuvent être définies en renseignant ces dimensions sur le terminal électronique 20. Les dimensions du polyèdre peuvent également être définies en sélectionnant une arête ou un sommet du polyèdre à l'aide d'une surface tactile et en déplaçant cette arête ou ce sommet pour modifier les dimensions du polyèdre.

La position et l'orientation du polyèdre peuvent également être définies dans l'environnement virtuel 1, par exemple par rapport à un repère de référence, tel que le repère Oxyz de l'environnement virtuel 1. De la même manière que les dimensions, la position et l'orientation peuvent être définies par l'utilisateur en renseignant ces informations au moyen du terminal électronique 20. La position et l'orientation peuvent également être définies par l'utilisateur en déplaçant la zone virtuelle 6 dans l'environnement virtuel 1 à l'aide du module de définition.

La zone virtuelle 6 peut ensuite être validée par l'utilisateur via le module de définition.

Le module de définition peut empêcher ou inhiber une validation de la zone virtuelle 6 et/ou déclencher une alerte (visuelle et/ou sonore) si ladite zone virtuelle 6 chevauche au moins une portion d'un objet virtuel environnant 2, 3, 4 de l'environnement virtuel 1.

La zone virtuelle 6 peut également être dessinée par la détection d'un mouvement des mains, par exemple lorsque l'utilisateur porte un casque de réalité virtuelle.

Dans un second exemple, la zone virtuelle 6 peut être définie en renseignant à l'aide du terminal électronique 20 la forme et les dimensions de la zone virtuelle 6 ainsi que sa position et son orientation dans l'environnement virtuel 1.

Dans l'exemple illustré sur la figure 2, l'utilisateur a défini une zone virtuelle 6 parallélépipédique à proximité d'un mur 3 au-dessus d'un lavabo. La zone virtuelle 6 peut comprendre n'importe quelle forme polyédrique. Cette zone libre correspond à un emplacement libre dans lequel l'utilisateur souhaite insérer un objet virtuel. La méthode selon l'invention permet avantageusement de proposer à l'utilisateur des objets virtuels qui vont correspondre à cette zone virtuelle 6. La forme polyédrique peut, par exemple, comprendre un parallélépipède et un cube adjacent audit parallélépipède.

Dans un exemple, la zone virtuelle 6 comprend un ou plusieurs polyèdres adjacents.

Selon un autre exemple, l'utilisateur peut définir la zone au moyen d'une forme sphérique, cylindrique, torique ou encore toute autre zone définissant un volume régulier tridimensionnel.

Selon un exemple, l'utilisateur peut définir des zones dites complexes formées de différentes formes régulières 2D et 3D, telles que :
▪ une combinaison de deux parallélépipèdes adjacents partageant une surface de contact commune et présentant des dimensions différentes ;
▪ une combinaison d'un parallélépipède et d'un tétraèdre partageant une surface de contact commune ;
▪ une combinaison d'un parallélépipède et d'une sphère ;
▪ une combinaison d'un tétraèdre et d'un cylindre ;
▪ une combinaison d'un tétraèdre et d'un cylindre.

Selon un mode de réalisation, un ensemble de zones complexes prédéfinies sont proposées au moyen d'une interface utilisateur. Les zones virtuelles complexes comprennent par exemple un assemblage de formes régulières géométriques telles qu'un assemblage de plusieurs formes parallélépipédiques ou un assemblage de plusieurs formes cylindriques. Ces formes régulières géométriques sont préférentiellement tridimensionnelles.

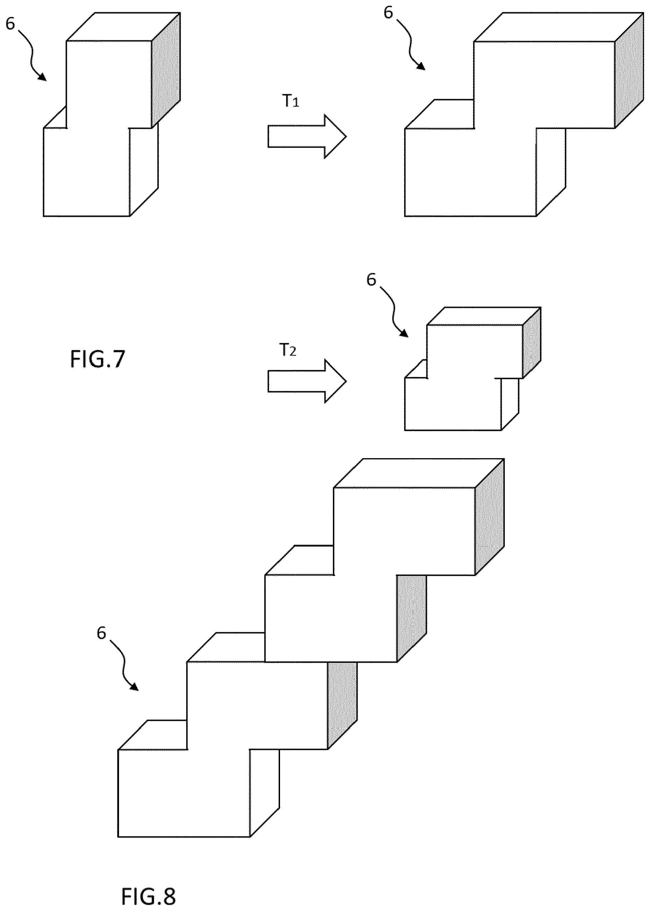

Un exemple de réalisation est illustré à la figure 7 dans laquelle une zone virtuelle complexe 6 est définie par une juxtaposition de deux parallélépipèdes formant une marche d'escalier.

Un avantage d'une telle zone virtuelle complexe 6 est de permettre de positionner des zones virtuelles prédéfinies dans un environnement virtuel afin d'optimiser la requête qui sera automatiquement générée notamment en prenant en compte une caractéristique de ladite zone. A titre d'exemple, la zone virtuelle complexe 6 peut être utilisée de sorte à définir une zone telle qu'une chaise ou encore une zone épousant une surface comprenant un dénivelé ou un renfoncement.

La figure 7 représente deux opérations consistant en deux transformations T₁, T₂ permettant de déformer la zone selon la longueur, respectivement la hauteur de la zone virtuelle complexe 6. Cette transformation peut être homothétique sur toute la zone virtuelle, c'est-à-dire homogène sur l'ensemble des deux parallélépipèdes juxtaposés tel que cela est représenté sur la figure 7. Dans un autre mode de réalisation, l'invention permet de définir des transformations différenciées de chaque forme régulière appartenant à une même zone virtuelle complexe 6, chaque transformation étant appliquée à une zone géométrique régulière de manière indépendante vis-à-vis des autres transformations appliquées aux autres zones géométriques régulières. Cette fonction permet notamment de générer des zones virtuelles complexes très variées très rapidement. En outre, cela permet d'adapter une zone virtuelle à un environnement virtuel comprenant de nombreux objets virtuels.

Selon un exemple, il est possible d'étirer une première forme régulière d'une zone virtuelle complexe selon une direction donnée pour l'allonger selon cette direction et il est possible d'étirer une seconde forme régulière d'une même zone virtuelle complexe selon une autre direction donnée pour l'étirer selon cette autre direction.

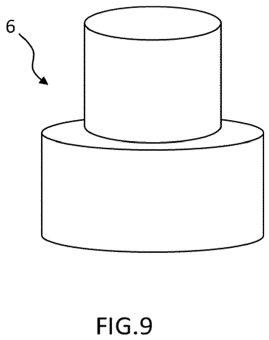

La figure 8 représente une zone virtuelle complexe prédéfinie définissant une zone de l'espace en forme escalier et la figure 9 représente une zone virtuelle complexe 6 définissant une juxtaposition de cylindres pouvant être déformés longitudinalement et radialement. Il est par exemple possible de réduire une des bases d'un cylindre pour le transformer en un cône.

La transformation peut être engagée par une commande d'un clavier d'ordinateur ou par un stylet et une tablette ou encore au moyen d'une souris ou d'une surface tactile. Selon un mode de réalisation, la transformation est engagée avec un doigt d'un utilisateur par exemple sur une surface tactile ou encore dans l'espace lorsqu'un dispositif d'acquisition d'images permet de détecter le mouvement dudit doigt. L'action de déformation peut être réalisée en sélectionnant un point d'une forme régulière, une arête ou encore une surface de ladite forme régulière.

Selon un mode de réalisation, un volume définissant la zone virtuelle peut être défini à partir d'un casque de réalité virtuelle et un mouvement de la main dans cet espace virtuel qui serait acquis par une optique. Un avantage est de permettre de dessiner un volume simplement avec le doigt au moyen d'un capteur ou d'une optique permettant d'acquérir un mouvement dans l'espace et d'en générer une trace dans un environnement virtuel affiché dans un afficheur tel qu'un casque de réalité virtuelle.

Le procédé de l'invention permet de générer une requête numérique comportant plusieurs critères définis par les différentes dimensions de la zone virtuelle complexe 6. Par exemple, la hauteur maximale, la longueur maximale et la largeur maximale permettent de définir des critères dits principaux. Les longueurs intermédiaires ou les hauteurs intermédiaires ou les largeurs intermédiaires, c'est-à-dire les dimensions définies entre deux formes géométriques régulières d'une même zone virtuelle complexe, peuvent définir des critères secondaires qui sont pris en compte par exemple lorsque les dimensions des objets virtuels sont renseignées dans une base de données caractérisant les objets virtuels. A titre d'exemple, une hauteur d'assise d'une chaise, ou une hauteur de dossier d'une chaise, ou encore une longueur de marche d'escalier ou encore la largeur d'un lavabo en prenant la largeur du pied du lavabo. D'autres exemples de mobiliers peuvent être mieux discriminés en prenant en compte différents critères tels que des canapés ou encore des méridiennes.

Ainsi, l'invention permet de générer automatiquement des requêtes numériques prenant en compte un maximum de critères obtenus grâce à la définition d'une zone virtuelle complexe.

Selon une variante de réalisation, une zone virtuelle permet de définir un volume dans lequel un cône de lumière peut être affiché. Ainsi, l'invention ne se limite pas à la recherche d'objets de type mobilier, mais également à des objets représentant des effets de luminosité. Cette caractéristique permet notamment de sélectionner automatiquement des luminaires ayant une directivité et un cône de lumière adaptée à la zone virtuelle sélectionnée dès lors que ces critères sont renseignés dans une base de données référençant des luminaires.

Selon un mode de réalisation, une zone virtuelle complexe est définie par une zone sélectionnée dans l'environnement virtuel délimitée sur au moins une portion de sa surface par la surface complémentaire d'un objet virtuel présent dans un environnement virtuel. Ainsi, il est possible générer une surface complémentaire d'une surface délimitant l'environnement virtuel ou d'un objet présent dans un environnement virtuel. Selon un mode de réalisation, un clic au moyen d'un pointeur et d'une souris dans une région de l'environnement virtuelle permet de sélectionner des portions de surfaces adjacentes définies par la surface d'un objet déjà présent dans l'environnement. Une commande permet par exemple d'adapter cette surface, de la prolonger, de l'étendre ou toute autre action permettant de définir un volume final d'une zone virtuelle à partir d'une surface d'un objet.

Selon un mode de réalisation, il est possible de définir des zones virtuelles prenant en compte d'autres attributs d'objets virtuels ou d'artefact d'une surface délimitant l'environnement virtuel. Par exemple, une plinthe au mur peut être sélectionnée afin de sélectionner une zone virtuelle prenant en compte la surface ou le volume complémentaire de la surface ou du volume de la plinthe. Selon un autre exemple, une sélection d'un caisson de volets roulants permet de générer une zone virtuelle dont la géométrie générée prend en compte la forme complémentaire du caisson. Selon un autre exemple, la géométrie d'une cheminée, de sa profondeur, ses bordures, ses ornements, etc. peuvent être pris en compte dans la définition d'une zone virtuelle juxtaposée à une telle cheminée.

Selon un mode de réalisation, l'environnement virtuel est un jardin ou une terrasse. Une zone virtuelle complexe peut être définie pour définir un volume d'un arbre ou d'une plante. Par exemple, un cylindre peut être juxtaposé à un parallélépipède. Ainsi un utilisateur du logiciel peut sélectionner non pas un mobilier, mais une ressource végétale afin de projeter une visualisation d'un rendu d'un espace vert. Un avantage est de tenir compte d'un encombrement général d'un espace qu'on souhaite définir virtuellement.

### Extraction d'information de proximité

La méthode comprend ensuite une étape d'extraction PROX d'au moins une information de proximité P. Cette extraction permettra avantageusement de proposer à l'utilisateur des objets virtuels dans la zone virtuelle 6 prenant en compte le contexte de la zone virtuelle 6 dans l'environnement virtuel 1.

Selon un mode de réalisation, cette extraction PROX comprend le calcul d'une distance avec un ou plusieurs autres objets virtuels de l'environnement virtuel 1.

Selon un mode de réalisation, cette extraction PROX comprend le calcul d'une distance avec un type d'objet virtuel. En effet, tous les objets virtuels de l'environnement virtuel 1 et/ou de la bibliothèque 16 peuvent être classés par catégorie. L'extraction d'une information de proximité P peut comprendre le calcul d'au moins une distance entre la zone virtuelle 6 et un objet virtuel d'une catégorie donnée dans l'environnement virtuel 1. Dans ce dernier cas, une interface permet de définir par exemple le type d'objet virtuel environnant 2 dans une zone proche de la zone virtuelle.

Dans l'exemple illustré sur la figure 2, l'étape d'extraction PROX d'une information de proximité P comprend une première distance D1 entre la zone virtuelle 6 et le plafond 5, une deuxième distance D2 entre la zone virtuelle 6 et le sol, une troisième distance D4 entre la zone virtuelle 6 et un mur 3, une quatrième distance D3 entre la zone virtuelle 6 et un objet virtuel environnant 2 correspondant à un lavabo.

Dans un mode de réalisation, l'information de proximité peut également comprendre une longueur de contact avec un objet virtuel environnant, par exemple, un mur ou un plafond.

Dans cet exemple, l'information de proximité P peut comprendre une information du type : « à proximité d'un mur » ou « contre le mur » ainsi qu'une information du type « surélevé par rapport au sol » et une information du type « à proximité d'un meuble d'eau » puisque la zone virtuelle 6 est définie au-dessus d'un lavabo.

Une cinquième distance, non représentée, entre la zone virtuelle 6 et le mur 3 adjacent à la zone libre peut être incluse dans les informations de proximité. Cette distance est en l'occurrence nulle ou négligeable dans le cas de l'exemple de la figure 2. Selon d'autres exemples, l'existence d'une telle distance non nulle ou non négligeable pourrait permettre de restreindre la sélection d'objets à une table ou un îlot de cuisine.

Préférentiellement, l'information de proximité P peut comprendre une information de proximité P si la distance entre la zone virtuelle 6 et une catégorie d'objet virtuel et inférieur ou supérieur à une valeur seuil prédéfinie.

Selon un exemple de réalisation, la distance entre la zone virtuelle 6 et un objet virtuel environnant 2 ou une frontière 3 ou 4 de l'environnement virtuel 1 est calculée automatiquement en considérant les faces, les arêtes ou les points les plus proches entre d'une part ladite zone virtuelle et d'autre part l'objet virtuel environnant 2 ou la frontière 3 ou 4.

Un avantage de l'invention est de permettre de définir précisément une information d'encombrement et d'agencement disponible en permettant la construction d'une zone géométrique facilement et de fournir une information de contexte environnant de cette zone géométrique.

Selon un exemple de réalisation, la définition de la zone virtuelle est convertie en données géométriques G définissant notamment des dimensions de cette zone. Selon un mode de réalisation amélioré, la conversion permet de générer des informations d'orientation de ladite zone virtuelle. Par exemple, une des dimensions est définie comme la hauteur, une seconde dimension est définie comme l'épaisseur ou la largeur considérée au sein de la surface 4 du sol ou du plafond ou d'une surface parallèle à ces dernières. Enfin, la troisième dimension peut être considérée comme une dimension d'occupation murale. Dans le cas d'une zone virtuelle disposée au milieu d'une pièce ou du moins sans contact proche avec un mur 3, cette troisième dimension serait également considérée comme la seconde dimension, c'est-à-dire une dimension définissant une surface au sol ou au plafond ou dans un plan parallèle à l'une de ces deux dernières.

En conséquence la conversion d'une définition d'une zone virtuelle 6 en données géométriques G peut aboutir à la génération de 3 données de dimensions et 1 à 3 données d'orientation. Lorsque la donnée de proximité D est générée, cette dernière peut également être utilisée comme une donnée d'orientation, par exemple une distance au plafond, ou comme une donnée supplémentaire d'environnement telle qu'une proximité avec un lavabo.

La conversion peut être réalisée directement à partir d'un logiciel tel qu'un logiciel de CAO, désignant « conception assistée par ordinateur ». Selon différents exemples d'implémentations, le logiciel peut être un logiciel d'architecture d'intérieur, un logiciel d'intégration de mobilier tel que les assistants de conceptions de cuisines ou d'habillage d'intérieur. La fonction de définition d'une zone et de conversion de ladite zone peut être intégrée à un logiciel existant tel qu'un module d'extension d'un logiciel existant. Un tel module peut également être dénommé dans la littérature un module externe, un greffon, un plugiciel, ainsi qu' « add-in » ou « add-on » ou un « plugin » selon la terminologie anglo-saxone.

Un intérêt d'un tel module est de faciliter la génération automatique d'une requête de données pour rechercher des objets préexistants dans une base de données à partir d'un outil simple de conception qu'un dessinateur ou un concepteur pourrait manipuler. Cette possibilité ôte la contrainte d'une mesure des dimensions d'un environnement disponible sur un plan 3D et permet de définir possiblement des volumes complexes.

Une requête de données est générée automatiquement lorsqu'un utilisateur active cette fonction. Selon différentes mises en œuvre, une validation de l'utilisateur permet de générer une requête à un serveur distant et d'en interroger la base de données comportant la bibliothèque. Selon un autre mode de réalisation, une requête est automatiquement générée lors de la définition de la zone. Des premiers objets sont alors présentés à l'utilisateur au moyen d'une interface. Ce dernier peut alors adapter la taille de la zone pour modifier le filtrage des objets qui lui sont présentés. Les données supplémentaires telles que la donnée de proximité permettant de filtrer des objets déjà extraits à partir des dimensions du volume. Dans ce dernier mode de réalisation, les données converties sont envoyées en temps réel à un serveur distant qui extrait les données de la base de données pour les retourner au terminal utilisateur.

La requête de données est générée à partir des données géométriques G de la zone virtuelle 6, par exemple, ses dimensions, sa forme, sa position et/ou son orientation. La requête de donnée peut également être générée à partir des informations de proximité P extraites comme décrites ci-avant.

La requête peut-être ensuite transmise à un serveur distant comportant la bibliothèque 16 d'objets virtuels. Selon un autre mode de réalisation, la requête interroge en local une mémoire dans laquelle un ensemble d'objets virtuels sont déjà stockés sous forme de données numériques.

La requête peut être transmise sur un réseau NET connecté à ladite bibliothèque 16 d'objets virtuels.

### Bibliothèque d'objets virtuels

La bibliothèque 16 d'objets virtuels comprend une pluralité d'objets virtuels. Les objets virtuels peuvent comprendre des modèles en trois dimensions et/ou des formes en deux dimensions.

Chaque objet virtuel comprend à minima des dimensions qui en caractérisent des éléments de forme. Selon un mode de réalisation, chaque objet virtuel comprend une forme et des dimensions. Les dimensions d'un objet virtuel correspondent préférentiellement aux dimensions d'un objet correspondant dans le monde réel.

Chaque objet virtuel peut être associé à des contraintes de positionnement. Les contraintes de positionnement déterminent les contraintes d'un objet correspondant à un objet virtuel dans le monde réel et qui doit donc être respecté dans l'environnement virtuel 1.

Une contrainte de positionnement d'un objet virtuel peut comprendre l'orientation de cet objet virtuel. Par exemple, un objet virtuel correspondant à une table est associé à une contrainte d'orientation de manière que les pieds soient dirigés vers le bas ou parallèle à l'axe z. Dans un autre exemple, un objet virtuel correspondant à un cadre est associé à une contrainte d'orientation de manière qu'une face du cadre soit orientée parallèlement à la surface d'un mur 3 dans l'environnement virtuel 1. Selon un mode d'exécution alternatif ou cumulatif, chaque objet virtuel comprend une orientation prédéfinie selon au moins un axe du repère de l'environnement virtuel 1 (x, y, z). Par exemple, un lampadaire est orienté de manière à ce que sa dimension longitudinale soit parallèle à l'axe z vertical du repère de l'environnement virtuel 1. Cela permettra, pour la sélection du premier ensemble E1, de comparer les dimensions de l'objet virtuel et de la zone virtuelle 6 en fonction de l'orientation prédéfinie du lampadaire.

Une contrainte de positionnement peut être déduite automatiquement d'un type d'objet. Ainsi le type « table » hérite de propriétés de positionnement qui permettent d'affecter une des dimensions à la hauteur. Selon un autre exemple, un objet de type « lit » hérite de propriétés de positionnement qui permettent d'affecter les deux plus grandes dimensions dans un plan parallèle au sol.

Chaque objet virtuel peut être associé à des contraintes de proximité. Les contraintes de proximité déterminent les contraintes de la position d'un objet virtuel dans l'environnement virtuel 1 par rapport à d'autres objets virtuels dans l'environnement virtuel 1. Par exemple, un objet virtuel correspondant à une table est associé à une contrainte de proximité comprenant une distance nulle des pieds de la table avec un sol 4 dans l'environnement virtuel 1.

Chaque objet virtuel peut être associé à des contraintes de proximité. Les contraintes de proximité déterminent les contraintes de la position d'un objet virtuel dans l'environnement virtuel 1 par rapport à d'autres objets virtuels dans l'environnement virtuel 1. Par exemple, un objet virtuel correspondant à une table est associé à une contrainte de proximité comprenant une distance nulle des pieds de la table avec un sol 4 dans l'environnement virtuel 1.

Selon un exemple, la contrainte de proximité est héritée de la nature même de l'objet virtuel. Ainsi, une table est par définition posée sur le sol et peut donc être associée à une contrainte de proximité avec le sol d'un environnement virtuel dès lors qu'elle identifiée comme une « table ». Un intérêt est que lors de l'association de la donnée de proximité dès lors qu'une zone virtuelle est définie dans un environnement virtuel, cette dernière peut définir une donnée de la requête générée automatiquement. Ainsi, l'information de proximité peut automatiquement être générée de sorte qu'un attribut « PROXIMITE AVEC SOL » soit présent dans la requête lorsqu'une zone virtuelle est définie de manière à être juxtaposée à la surface du sol d'un environnement virtuel. De la même manière, le fait qu'une zone virtuelle soit définie à l'intérieur de l'environnement virtuel sans être à proximité d'un mur renforce le critère que la zone est probablement une table. Ainsi, selon un exemple de réalisation, une pluralité d'informations de proximité est exploitée de sorte à générer automatiquement une requête numérique. Les informations suivantes peuvent être encodées dans la requête numérique : « PROXIMITE AVCE SOL », « DISTANCE AVEC MUR ».

Coté serveur, l'invention permet de labelliser les objets virtuels au sein de la bibliothèque d'objets virtuels. Selon un exemple, ces labels peuvent automatiquement, être générés selon leur nature afin de prioriser les résultats d'une recherche. Ainsi, des « tables » pourront être labellisées avec une information de proximité indiquant une relative proximité au sol et une information de proximité indiquant une relative distanciation avec les murs.

Dans un second exemple, un objet virtuel correspondant à un cadre est associé à une contrainte de proximité comprenant une distance nulle avec un mur 3 et une distance supérieure à un seuil prédéfinie avec un sol de l'environnement virtuel 1.

Dans un mode d'exécution, la contrainte de proximité comprend une contrainte de distance maximale ou minimale prédéfinie avec un autre objet virtuel environnant 2. Par exemple, une telle contrainte peut consister en ce qu'un objet virtuel ne peut pas être placé dans un environnement virtuel 1 à moins d'une distance maximale prédéfinie d'un objet virtuel environnant 2 correspondant à un lavabo ou un objet comprenant une sortie d'eau dans le monde réel. Ou encore, la contrainte de proximité peut être utilisée pour exclure un type d'objet virtuel d'une pièce dans laquelle un autre objet virtuel environnant est déjà positionné.

Selon un exemple de réalisation, la requête numérique qui est automatiquement générée à partir de la définition de la zone virtuelle et notamment de ses dimensions peut comprendre un critère supplémentaire automatiquement associé aux dimensions de ladite zone virtuelle tel qu'une donnée caractérisant la nature d'un objet à proximité de la zone virtuelle. Le critère peut être une contrainte de proximité ou définie à partir d'une contrainte de proximité. Selon un exemple, le critère peut être défini à partir d'un attribut lié à la nature d'un objet à proximité de ladite zone virtuelle. Cet objet peut être un élément de l'environnement virtuel tel qu'une de ses surfaces le délimitant. Selon un mode de réalisation, lorsque la zone virtuelle est adjacente à une surface définissant une limite de l'environnement virtuel tel qu'un mur, un plafond ou un sol, cet attribut est automatiquement ajouté à la requête numérique générée. Ainsi, la requête générée permet d'émettre un critère supplémentaire qui sera traité par exemple par un moteur de recherche multicritères associant des éléments de mobiliers à des contextes d'usages ou des destinations dans un environnement donné. Cela permet par exemple de rechercher efficacement une applique sur un mur compte tenu d'une zone virtuelle définie sur la surface d'un mur d'un environnement virtuel.

Préférentiellement, les objets virtuels de la bibliothèque 16 sont classés par catégories. Chaque catégorie peut comprendre des objets virtuels correspondants à des objets de la même catégorie dans le monde réel (exemple: murs, plafonds, canapés, table ...). Par exemple, une catégorie peut être associée à une contrainte donnée associant cette contrainte donnée à tous les objets virtuels de cette catégorie.

La bibliothèque 16 peut être enregistrée sur un serveur connecté à un réseau NET. Le terminal électronique 20 peut comprendre des moyens de communication 25 pour se connecter audit réseau NET et optionnellement pour transmettre la requête au réseau NET. De manière alternative ou cumulative, la bibliothèque 16 d'objets virtuels peut être enregistrée dans une mémoire 24 du terminal électronique 20.

Selon un mode de réalisation, une base de données comporte les données de la bibliothèque. Cette base de données comprend une structure permettant d'associer chaque objet virtuel à des contraintes de proximité et des dimensions dudit objet et possiblement d'autres informations telles que des catégories d'objets, des recommandations d'usages, ou encore des contraintes diverses, etc.

Les données caractérisant des objets sont donc spécialement formatées pour être enregistrées dans une mémoire physique lorsqu'une telle base de données est utilisée. La mémoire est, par exemple, une base de données dont l'architecture permet une exploitation des données caractérisant ces objets telles que les dimensions ou les contraintes de proximité. Cette architecture permet notamment d'extraire des données automatiquement afin de générer des listes d'objets répondants aux données définissant les contraintes géométriques et de la donnée de proximité de la zone virtuelle. Ainsi, les données de type dimensions d'une zone virtuelle ou d'un objet virtuel ou des informations de proximité ou des contraintes de proximité peuvent préférentiellement refléter l'architecture de la base de données utilisée de sorte que ces données puissent être extraites et utilisées lors de calculs par l'une des étapes du procédé de l'invention.

Selon un mode de réalisation de l'invention, la requête est interprétée par un calculateur pour extraire les données d'une base de données telles que la bibliothèque 16. Les objets extraits de la bibliothèque 16 peuvent l'être selon différentes variantes visant à exploiter les données de la requête. Les données de dimensions de la zone virtuelle peuvent être exploitées indépendamment ou conjointement des données de proximité ou d'orientation de la requête.

L'exemple suivant traite de l'exploitation des données de la bibliothèque 16 en considérant un premier traitement des données de dimensions et un second traitement des données de proximité.

### Sélection d'un premier ensemble

La méthode comprend la sélection SEL1 d'un premier ensemble d'objets virtuels E1. Le premier ensemble d'objets virtuels E1 est sélectionné parmi les objets virtuels de la bibliothèque 16.

La sélection d'un premier ensemble E1 comprend la sélection d'objets virtuels dans la bibliothèque 16 dont les dimensions, et possiblement la ou les orientations, sont compatibles des données géométriques G caractérisant la zone virtuelle 6.

Par « compatibles », on entend ici que les dimensions des objets virtuels sélectionnés permettent une insertion complète de ces objets virtuels à l'intérieur de la zone virtuelle 6 définie, c'est-à-dire l'insertion de l'objet virtuel sans contact ou dépassement avec les limites de ladite zone virtuelle 6.

Le premier ensemble d'objets virtuels E1 comprend ainsi des objets virtuels dont les dimensions permettent leur insertion dans la zone virtuelle 6.

Dans un mode d'exécution, une fonction compare les données géométriques G de la zone virtuelle 6 aux dimensions des objets virtuels pour la sélection du premier ensemble E1. Par exemple, une fonction sélectionne les objets virtuels dont la plus grande dimension est inférieure à la plus grande dimension de l'objet virtuel.

Dans un autre exemple, le premier ensemble E1 inclut les objets virtuels dont les dimensions permettent leur insertion complète dans la zone virtuelle 6 lorsque l'objet virtuel sélectionné est orienté selon son orientation prédéfinie dans l'environnement virtuel 1.

### Sélection d'un second ensemble

La méthode selon l'invention comprend, en outre, la sélection SEL2 d'un second ensemble E2 d'objets virtuels. Le second ensemble E2 d'objets virtuels peut être sélectionné parmi la bibliothèque 16 d'objets virtuels ou parmi le premier ensemble d'objets virtuels E1 sélectionné. Le second ensemble E2 d'objets virtuels est filtré en fonction de l'information de proximité P extraite de (ou associée à) la zone virtuelle 6.

Le second ensemble E2 d'objets virtuels est préférentiellement sélectionné parmi les objets virtuels dont les contraintes de proximité associées à l'objet virtuel sont compatibles avec les informations de proximité associées à la zone virtuelle 6.

Par « compatibles », on entend ici que les contraintes de proximité associées à l'objet virtuel sont satisfaites par les informations de proximité extraites de la zone virtuelle 6.

Par exemple, si une information de proximité P de la zone virtuelle 6 comprend une distance avec un mur 3 de l'environnement virtuel 1 inférieure à une valeur seuil, la sélection du second ensemble E2 peut sélectionner les objets virtuels comprenant une contrainte de proximité incluant un contact d'un point de l'objet virtuel à un objet virtuel environnant de type « mur ».

Le second ensemble E2 d'objets virtuels comprend alors avantageusement des objets virtuels dont toutes les contraintes de proximité sont compatibles des (ou satisfaites par les) informations de proximité extraites de la zone virtuelle 6.

La sélection d'objets virtuels dans la bibliothèque 16 peut être traitée de sorte que le premier et le second ensemble sont définis dans la même étape, par exemple à partir d'une recherche multicritère. Selon un autre exemple, le premier ensemble est sélectionné dans un premier temps et le second ensemble est sélectionné à partir du premier ensemble dans un second temps. Selon un autre exemple, le second ensemble est sélectionné dans un premier temps et le premier ensemble est sélectionné à partir du second ensemble dans un second temps.

### Extraction d'une liste d'objets virtuels

La méthode comprend l'extraction d'une liste L1 d'objets virtuels, parmi la bibliothèque 16 d'objets virtuels, compris dans le premier ensemble E1 et le second ensemble E2 sélectionnés.

La liste L1 d'objets virtuels comprend ainsi les objets virtuels de la base de données dont les dimensions et les contraintes de proximité sont compatibles avec respectivement les données géométriques G et les informations de proximité de la zone virtuelle 6.

La liste L1 d'objets virtuels comprend avantageusement des objets virtuels pouvant être insérés dans la zone virtuelle 6 définie et en cohérence avec l'environnement virtuel 1.

Les données de proximité peuvent être des labels, c'est-à-dire des tags, ou encore elles peuvent être déduites de la nature des objets virtuels définis dans la bibliothèque selon des règles d'héritage des propriétés des objets. Ainsi, selon un exemple, une lampe comportant un support ayant une certaine hauteur seuil peut être labellisée avec deux informations de proximité indiquant une proximité avec un mur, voire deux murs. Ce label peut être automatiquement généré du fait de la nature de l'objet « LAMPE AVEC HAUTEUR MINIMALE ». Selon un autre exemple, un canapé peut avoir un label indiquant une proximité avec un mur. Une table peut avoir un label indiquant une proximité avec un sol et une distance minimale avec chaque mur. Un lavabo peut avoir un label indiquant une proximité avec le sol. Selon un premier mode, des mots clefs sont ajoutés aux objets de la bibliothèque, selon un second mode, une règle d'association est prédéfinie entre la nature de l'objet et une information de proximité. Selon un troisième mode, une combinaison des deux solutions est mise en œuvre au sein de la bibliothèque d'objets virtuels.

Dans un mode d'exécution, l'extraction d'une liste L1 d'objets virtuels peut comprendre un calcul d'un score associé à chaque objet virtuel de ladite liste L1 extraite. Le score peut être exploité pour hiérarchiser différents objets virtuels sélectionnés à partir de différents critères.

Un utilisateur peut alors annoter un objet virtuel de la liste de manière à retirer ce type d'objets virtuels. Ainsi, le score calculé permet de régénérer une nouvelle liste d'objets virtuels dont les scores associés auxdits objets sont recalculés automatiquement. Cette solution permet de traiter des ambiguïtés lorsque des objets de différents types comprennent des dimensions similaires ou proches et que l'information de proximité ne permet pas de distinguer les deux types d'objets.

Le score peut être calculé en fonction de corrélation des données géométriques G et des informations de proximité associées à la zone virtuelle 6 avec respectivement les dimensions et les contraintes de proximité d'un objet virtuel. Le score est ensuite associé audit objet virtuel. La liste L1 d'objets virtuels extraite peut comprendre un classement des objets virtuels de ladite liste L1 en fonction du score qui leur est associé, par exemple par ordre de score décroissant.

### Filtres supplémentaires lors de l'extraction

Selon un mode d'exécution de l'invention, la méthode peut comprendre en outre un filtrage de la bibliothèque 16. L'étape de filtrage comprend la sélection d'un filtre par l'utilisateur et l'application de ce filtre aux objets virtuels de la bibliothèque 16. Ainsi, les objets virtuels ayant été filtrés ne sont pas inclus dans la liste L1 d'objets virtuels.

Par exemple, l'utilisateur peut sélectionner un filtre de couleur et la liste L1 d'objets virtuels inclura alors seulement les objets virtuels comprenant la ou les couleurs sélectionnées.

Selon différents modes de réalisation, les filtres peuvent prendre en compte d'autres critères tels que de manière non limitative :
▪ une marque, une gamme d'un produit ou d'une famille de produits ;
▪ une gamme de prix, une fourchette minimale ou maximale ;
▪ une donnée caractérisant un style tel qu'une époque ;
▪ des données d'un profil utilisateur, par exemple un profil enfant pour sélectionner un mobilier adapté ;
▪ Etc.

Selon un exemple de réalisation, l'information de proximité est une couleur d'un objet situé dans une zone proche de la zone virtuelle de manière à proposer à l'utilisateur des objets virtuels dans des tons ou des nuances de couleurs sont en cohérence avec ladite couleur. Cette information peut être par exemple extraite depuis un nuancier ayant préalablement associé des couleurs entre elles.

### Affichage de la liste d'objets virtuels

La méthode peut comprendre enfin une étape d'affichage d'objets virtuels de la liste L1 extraite. Préférentiellement, ces objets virtuels sont affichés sur un afficheur du terminal électronique 20 de l'utilisateur. Les objets virtuels affichés 13 peuvent comprendre les objets virtuels de la liste L1 dont le score associé est le plus grand ou le plus proche d'une valeur cible.

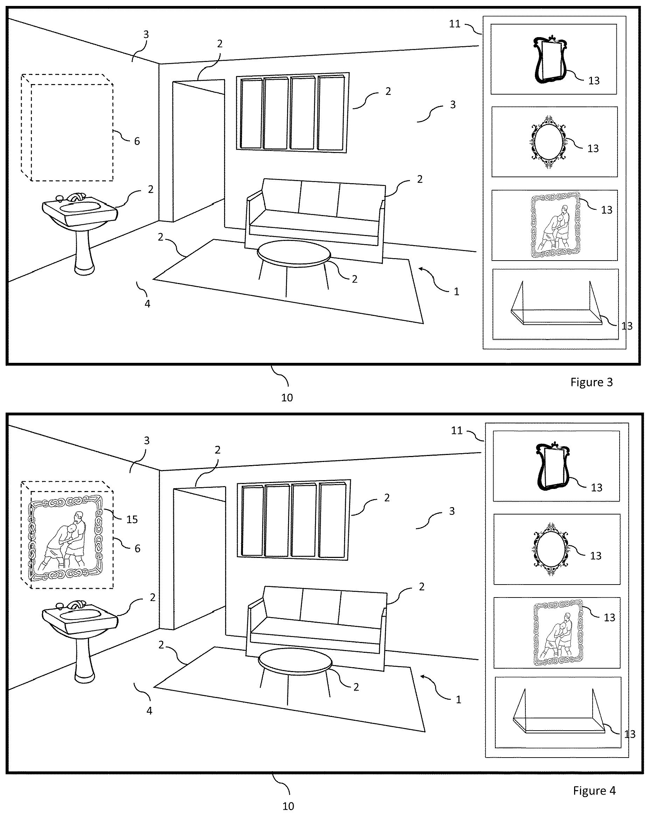

Comme illustré sur la figure 3, l'afficheur 10 du terminal électronique 20 peut afficher l'environnement virtuel 1. L'afficheur 10 peut également afficher, dans une fenêtre 11, des objets virtuels 13 issus de la liste L1 extraite.

Les objets virtuels 13 peuvent aussi être affichés sous la forme d'une liste L1 de choix déroulant. Cela permet avantageusement de disposer d'un sous-ensemble d'objets virtuels issus de la liste L1 dans la même fenêtre 11 que celle représentant l'environnement virtuel 1.

Par exemple, après avoir défini une zone virtuelle 6 parallélépipédique contre un mur 3 de l'environnement virtuel 1, quatre objets virtuels 13 ont été sélectionnés dans la bibliothèque 16 et sont affichés dans une fenêtre 11 de l'afficheur 10. Ces objets virtuels 13 sont tous des objets dont les dimensions permettent leur insertion dans la zone virtuelle 6. Par ailleurs, les objets virtuels sélectionnés 13 n'ont pas de contrainte de proximité avec un lavabo. Autrement dit, les objets virtuels sélectionnés 16 dans la bibliothèque 16 sont les objets virtuels dont la contrainte de proximité avec un lavabo est une distance maximale qui est inférieure à la distance D3.

L'avantage de la méthode selon l'invention est qu'elle permet de proposer à l'utilisateur des objets compatibles avec la zone virtuelle 6 auxquels il n'aurait pas pensé spontanément ou auxquels il n'aurait pas eu accès en cherchant de manière classique des objets dans une bibliothèque 16 par l'application de filtres qui présupposent la connaissance du type d'objets que l'on cherche.

Par exemple, un architecte aurait pu penser à placer un petit miroir au-dessus d'un lavabo et aurait donc cherché dans une bibliothèque 16 les petits miroirs. La méthode selon l'invention permet avantageusement de proposer à l'utilisateur des objets auxquels il n'aurait pas pensé à aller chercher, mais qui seraient compatibles avec la zone virtuelle 6.

Dans un autre exemple non-représenté, si la zone virtuelle est adjacente ou comprend une portion du plafond, un objet virtuel 13 affiché dans la fenêtre 11 de l'afficheur 10 peut comprendre une fenêtre de toit.

Dans un autre exemple non-représenté, si l'information de proximité est représentative d'une zone virtuelle dont au moins une portion est en dessous du sol ou du plan horizontal du repère orthonormé du référentiel, un objet virtuel 13 affiché dans la fenêtre 11 peut comprendre une piscine ou un spa.

### Insertion d'un objet virtuel dans la zone virtuelle

Selon un mode de réalisation, la méthode de l'invention comprend en outre la sélection par l'utilisateur d'un objet virtuel 13 affiché. Cette sélection peut être réalisée via une interface utilisateur du terminal électronique 20 à partir d'une commande tactile, d'un pointeur ou d'une commande à partir d'un clavier ou d'une interface de commande.

L'objet virtuel 13 peut alors être inséré automatiquement dans l'environnement virtuel 1. L'utilisateur peut ensuite générer un déplacement de l'objet virtuel sélectionné 15 dans l'environnement virtuel 1, préférentiellement pour le placer dans la zone virtuelle 6.

Préférentiellement, la sélection d'un objet virtuel affiché 15 génère automatiquement son insertion dans la zone virtuelle 6 définie de l'environnement virtuel 1. Ladite insertion est préférentiellement réalisée automatiquement de manière à satisfaire les contraintes de l'objet virtuel sélectionné 15.

Dans un exemple illustré sur la figure 4, un utilisateur a sélectionné l'objet virtuel affiché 15 correspondant dans ce cas à un cadre et cet objet a été automatiquement inséré dans la zone virtuelle 6 parallèlement au mur 3 auquel la zone est apposée et est automatiquement placée contre ledit mur 3.

### Terminal électronique

La méthode selon l'invention peut être mise en œuvre par un terminal électronique 20 tel qu'illustré sur la figure 6. Selon un mode de réalisation, le terminal électronique 20 comprend un afficheur 10. L'afficheur 10 permet avantageusement d'afficher l'environnement virtuel 1, la zone virtuelle 6 et/ou la fenêtre de résultat(s) 11.

Le terminal électronique 20 comprend préférentiellement un module de définition 22. Selon un exemple, le module de définition 22 comprend une interface utilisateur. Le module de définition 22 peut comprendre à cette fin un clavier, une souris ou une surface tactile. Le module de définition 22 peut également comprendre selon une variante un écran tactile de l'afficheur 10.

Selon un mode de réalisation, le terminal électronique 20 comprend un calculateur 26. Le calculateur 26 permet de mettre en œuvre au moins une des étapes de la présente méthode selon l'invention.

Le terminal électronique 20 comprend avantageusement une mémoire 24 (préférentiellement une mémoire non transitoire). La mémoire 24comprend par exemple un support de données sur lequel est enregistré un programme d'ordinateur comprenant des instructions qui conduisent à exécuter les étapes de la méthode selon l'invention. La mémoire 24 peut également comprendre un support de données sur lequel est stockée la bibliothèque 16 d'objets virtuels.

Le terminal électronique 20 comprend des moyens de connexion ou de communication 25 avec un réseau NET lorsque ce dernier est utilisé par exemple pour être se connecter à un serveur distant. Les moyens de connexions 25 sont conçus pour envoyer et recevoir des données via le réseau de données NET à un serveur distant. Par exemple, les moyens de connexions 25 permettent dans un premier temps de transmettre la requête ou les données géométriques G et/ou les informations de proximité P. Les moyens de connexions 25 peuvent également permettre la réception de la liste L1 d'objets virtuels qui sont extraits de la base de la bibliothèque 16.

Le réseau de données NET peut être connecté à un serveur. Ledit serveur peut comprendre un support de données sur lequel est enregistré un programme d'ordinateur comprenant des instructions qui conduisent à exécuter les étapes de la méthode selon l'invention. Ledit serveur peut également comprendre un support de données sur lequel est stockée la bibliothèque 16 d'objets virtuels.

L'ordinateur peut être selon les modes de réalisation, un PC, une tablette, un serveur, un Smartphone ou un calculateur intégré sur une carte électronique.

## Revendications

1. Méthode pour générer une liste d'objets virtuels comprenant :
▪ une définition (DEF) d'une zone virtuelle (6) correspondant à une zone d'espace disponible dans un environnement virtuel (1) correspondant à un environnement réel, ledit environnement virtuel étant défini par une pluralité de points et de surfaces délimitant une région associée à un repère cartésien et comportant une représentation 3D pouvant être générée sur un afficheur d'un terminal électronique selon un angle de vue, ladite zone virtuelle (6) étant défini par un premier utilisateur à l'aide d'un premier terminal électronique (20), la zone virtuelle (6) étant **caractérisée par** des données géométriques (G) dans un repère associé à l'environnement virtuel (1) ;
▪ une extraction (PROX) d'au moins une information de proximité (P) de la position de la zone virtuelle (6) avec un objet virtuel environnant (2, 3, 4) agencé à proximité de ladite zone virtuelle (6) dans l'environnement virtuel (1), ledit objet étant un objet défini par une pluralité de points et de surfaces et comportant une représentation 3D pouvant être générée sur un afficheur d'un terminal électronique, selon un angle de vue ;
▪ une génération (REQ) d'une requête de données à partir des données géométriques et de l'information de proximité (P) ;
▪ transmission (TRA) de ladite requête à une bibliothèque (16) d'objets virtuels, ladite bibliothèque comportant des données caractérisant des informations de proximité d'au moins un objet virtuel, ladite bibliothèque étant accessible depuis un serveur distant ;
▪ une sélection (SEL1) d'un premier ensemble d'objets virtuels (E1) dans la bibliothèque (16) d'objets virtuels dont les dimensions sont compatibles des données géométriques (G) caractérisant la zone virtuelle (6),
▪ une sélection (SEL2) d'un second ensemble d'objets (E2) virtuels filtrés dans la bibliothèque (16) en fonction de l'information de proximité (P) associée à la zone virtuelle (6) ;
▪ une extraction (EXTR) d'une liste d'objets (L1) compris dans les deux ensembles sélectionnés (E1, E2) ;
▪ un affichage, dans une fenêtre de résultat (11) du premier terminal électronique (20), d'objets virtuels (13) issus de ladite liste d'objets virtuels (L1).

2. Méthode selon la revendication 1, dans laquelle une pluralité de zones virtuelles complexes sont prédéfinies et sont accessibles depuis une interface utilisateur, chaque zone virtuelle complexe comportant un assemblage de formes tridimensionnelles régulières géométriques, au moins une zone virtuelle complexe comportant un assemblage d'une pluralité de formes parallélépipédiques.

3. Méthode selon la revendication 2, caractérisé en que la requête générée automatiquement à partir de la sélection d'une zone virtuelle complexe comporte au moins 4 dimensions extraites de ladite zone virtuelle complexe.

4. Méthode selon la revendication 2, dans laquelle une commande entrainant une transformation appliquée à une forme tridimensionnelle régulière géométrique d'une zone virtuelle complexe entraine la déformation de l'ensemble de la zone virtuelle complexe.

5. Méthode selon la revendication 2, dans laquelle une commande entrainant une transformation appliquée à une forme tridimensionnelle régulière géométrique d'une zone virtuelle complexe entraine la déformation de la seule forme tridimensionnelle régulière géométrique.

6. Méthode selon la revendication 1, **caractérisé en ce que** au moins une surface de la zone virtuelle est définie au moyen d'une sélection d'un point ou d'une zone dans l'environnement virtuel et la détection d'une surface complémentaire d'un objet virtuel présent dans un environnement virtuel à proximité de ladite sélection.

7. Méthode selon la revendication 1, dans laquelle les objets virtuels de la bibliothèque (16) comprennent chacun des informations de contrainte de proximité et la sélection d'un second ensemble (E2) comprend la sélection d'objets virtuels dont les contraintes de proximité sont compatibles avec l'information de proximité (P) de la zone virtuelle (6).

8. Méthode selon l'une quelconque des revendications précédentes, dans laquelle la sélection (SEL1) d'un premier ensemble (E1) comprend la sélection des objets virtuels de la bibliothèque (16) dont au moins deux dimensions sont telles qu'une surface ou le volume de l'objet virtuel (2) peu(ven)t être géométriquement contenu(e) dans une surface définie par la zone virtuelle ou le volume défini par la zone virtuelle (6).

9. Méthode selon l'une quelconque des revendications précédentes dans laquelle l'information de proximité (P) comprend une distance entre la zone virtuelle (6) et un objet virtuel environnant (2) de l'environnement virtuel (1) et/ou une donnée caractéristique d'une position de ladite zone virtuelle vis-à-vis objet virtuel environnant.

10. Méthode selon l'une quelconque des revendications précédentes dans laquelle la définition de la zone virtuelle (6) comprend une étape de génération d'une forme et des dimensions de la zone virtuelle (6) et une étape de positionnement et d'orientation de la zone virtuelle (6) dans l'environnement virtuel (1).

11. Méthode selon la revendication 10, dans laquelle la génération d'une forme peut être réalisée par un dessin d'un utilisateur par un module de définition du premier terminal.

12. Méthode selon l'une quelconque des revendications 1 à 11, comprenant en outre la sélection d'un objet virtuel parmi la liste d'objets virtuels (L1) affichés et son insertion dans la zone virtuelle (6).

13. Produit programme d'ordinateur comprenant des instructions de code de programme enregistré sur un support utilisable dans un ordinateur qui conduisent à exécuter les étapes de la méthode selon l'une des revendications 1 à 12 lorsque ledit programme fonctionne sur un ordinateur.

14. Terminal électronique (20) comprenant des éléments matériels et logiciels pour exécuter la méthode selon l'une quelconque des revendications 1 à 12.

15. Terminal électronique (20) selon la revendication 14, dans lequel les éléments matériels comprennent :
▪ un afficheur pour afficher l'environnement virtuel (1) et la fenêtre de résultat (11) ;
▪ un module de définition pour définir la zone virtuelle (6) dans l'environnement virtuel (1) et des moyens de connexion à une bibliothèque (16) d'objets virtuels ; et/ou
▪ Une mémoire (24) pour stocker une bibliothèque (16) d'objets virtuels et/ou des moyens de connexion (25) à un réseau (NET).
